# FASCICULE DE BREVET EUROPEEN

(11) **EP 2 108 293 B1**
(45) Date de publication et mention de la délivrance du brevet: **15.09.2010**
(21) Numéro de dépôt: 09004936.2
(22) Date de dépôt: 02.04.2009
(51) Int. Cl.: A47J 19/02, A47J 43/07

(54) **Appareil de traitement mecanique d'aliments comportant un dispositif presse-puree**
Gerät zur mechanischen Behandlung von Lebensmitteln, das mit einer Vorrichtung zum Püreepressen ausgestattet ist
Appliance for mechanical treatment of food comprising a potato-masher device

(30) Priorité: 11.04.2008 FR 0852445
(43) Date de publication de la demande: 14.10.2009
(73) Titulaire: Hameur S.A., 2412 Luxembourg (LU)
(72) Inventeur: Baudot, M. Cédric, Pascal, 71230 Saint Vallier (FR); Dumas, M. Pierre Bernard Claude, 71230 Saint Roman Sous Gourdon (FR); Fevre, M. Loïc, Xavier, 71410 Sanvignes Les Mines (FR)
(74) Mandataire: Schmit, Christian Norbert Marie

(56) Documents cités:
- EP-A- 0 101 237
- EP-A- 0 299 236
- WO-A-01/74215
- WO-A-01/79746
- WO-A-2008/031803
- BE-A- 459 774
- BE-A- 463 678
- FR-A- 2 859 617
- US-A- 5 421 248

## Description

La présente invention concerne un dispositif de traitement mécanique d'aliments. L'objet de l'invention est de proposer l'adaptation d'un dispositif presse-purée à un appareil de type coupe-légumes, notamment un appareil coupe-légumes destiné à la restauration collective. L'intérêt de l'invention est de réunir plusieurs fonctionnalités en un seul appareil.

Un appareil de type coupe-légumes comporte notamment une chambre surmontée d'un couvercle, ce couvercle comportant lui-même une ouverture par laquelle on introduit les aliments. La chambre comporte un arbre moteur, sur lequel s'adaptent des disques munis de différents outils tranchants, permettant d'obtenir une variété de coupes (frites, cubes, julienne...).

Un appareil de type presse-purée comporte notamment une chambre surmontée ou non d'un couvercle, dans laquelle on introduit les légumes par gravité. La chambre comporte une grille fixe, munie de trous de taille variable, ainsi qu'un arbre moteur portant un outil rotatif de pression des aliments, en général une palette de forme hélicoïdale. Cet outil de pression est actionné à la main ou par l'intermédiaire d'un moteur.

L'objet de l'invention est d'adapter un dispositif presse-purée au socle d'un appareil de type coupe-légumes, afin de regrouper plusieurs fonctionnalités en une seule machine. L'invention s'applique au domaine de l'électroménager familial, mais également à celui de l'électroménager de restauration collective. Le système utilisé doit donc permettre de fabriquer de grosses quantités de purée en peu de temps.

L'adaptation d'un dispositif presse-purée à un appareil de type coupe-légumes met en évidence divers problèmes techniques, l'un des plus importants étant posé par la taille de la chambre. La chambre d'un coupe-légumes est de taille significativement plus réduite que celle d'un presse-purée. En effet, les légumes qui y sont introduits sont découpés au fur et à mesure par les disques tranchants. Au contraire, l'utilisation d'un presse-purée implique couramment l'introduction de légumes cuits entiers (pommes de terre, carottes, navets...) ou coupés en gros morceaux.

En raison de la taille limitée de la chambre, l'introduction de légumes entiers dans un coupe-légumes équipé en presse-purée provoquerait rapidement un encombrement, voire un blocage du système au cas où un légume mal cuit résisterait à l'outil de pression. Or, un objet de l'invention est l'obtention d'un débit de purée important.

Le document W020081031803 divulgue un appareil de traitement des aliments comportant une grille presse-purée et un outil rotatif de pression des aliments sur ladite grille. L'outil de pression comporte des pales, dont un bord avant, par rapport au sens de rotation, est surélevé par rapport à un bord arrière. Ledit bord avant est équipé d'une arête coupante, visant à trancher les aliments avant leur application sur la grille, Ce dispositif présente néanmoins des inconvénients pour l'obtention d'un débit de purée important.

La présente invention permet de résoudre ces problèmes. Elle se rapporte à un appareil de traitement mécanique d'aliments comportant un dispositif presse-purée, ledit dispositif comprenant un arbre moteur sur lequel s'adaptent une grille presse-purée, un outil de pression des aliments pour appliquer les aliments contre la grille, et un disque évacuateur des aliments traités, situé sous la grille ; l'outil de pression comprenant un moyeu , destiné à s'adapter sur l'arbre moteur de la chambre, et au moins une pale, cette pale portant un moyen de découpe des aliments avant leur application contre la grille ; ledit appareil étant **caractérisé en ce que** la pale est formée de deux parties sensiblement planes, la partie la plus éloignée de la grille portant le moyen de découpe des aliments, un angle entre le plan de la partie la plus éloignée de la grille et l'axe du moyeu étant compris entre 60 et 80° et un angle entre la plan de l'autre partie et l'axe du moyeu étant compris entre 30 et 50°.

Ainsi, un légume introduit dans la chambre de l'appareil est d'abord découpé, puis écrasé par l'outil de pression. Les légumes étant généralement introduits par gravité, le moyen de découpe des aliments se trouve dans la partie supérieure de l'outil de pression. La hauteur de l'outil de pression est sensiblement égale à la hauteur de la chambre ; ainsi, les aliments se retrouvent en contact avec le moyen de découpe dès leur passage dans la chambre.

De manière préférentielle, le moyen de découpe utilisé est une arête coupante, portée par l'outil rotatif de pression des aliments. Cette arête est de préférence orientée perpendiculairement à l'axe de l'arbre moteur et se trouve en avant de l'outil de pression par rapport au sens de rotation.

De manière préférentielle, l'outil rotatif de pression des aliments comporte deux pales identiques, l'axe du moyeu constituant un axe de symétrie de l'outil.

De manière préférentielle, la grille presse-purée comporte une couronne surmontant le disque perforé. Cette couronne encercle la chambre utile balayée par l'outil de pression des aliments. Elle a donc la même hauteur que cet outil et son rayon interne est sensiblement égal à la distance comprise entre l'axe du moyeu et le bord externe de l'outil.

La couronne est préférentiellement réalisée dans un matériau tel que le frottement avec l'outil de pression provoque des pertes de charge limitées. On peut notamment utiliser un matériau plastique.

L'intérêt de cette couronne est d'éviter les frottements entre l'outil de pression et les parois de la chambre, sans générer l'existence d'un volume mort d'aliments non traités. De plus, dans le cas où la chambre comporte des ouvertures situées au-dessus de la grille, la couronne a pour fonction de contenir les aliments avant leur réduction en purée.

Ce système permet d'assurer un débit important de purée, en tenant compte de la fermeté et de la friabilité variables des légumes introduits. L'appareil de traitement mécanique d'aliments selon l'invention offre donc un large choix de fonctionnalités. Il peut avantageusement être utilisé en restauration collective, aussi bien en tant que coupe-légumes qu'en tant que presse-purée.

L'invention sera mieux comprise à la lecture de la description qui suit et à l'examen des figures qui l'accompagnent. Celles-ci sont présentées à titre indicatif et nullement limitatif de l'invention.
- Figure 1 : vue de l'appareil et des différents éléments du dispositif presse-purée selon l'invention.
- Figure 2: perspective cavalière d'un outil de pression des aliments selon l'invention.
- Figure 3 : vue de côté d'un outil de pression des aliments selon l'invention.
- Figure 4 : perspective d'un entonnoir pouvant être adapté sur l'appareil selon l'invention.

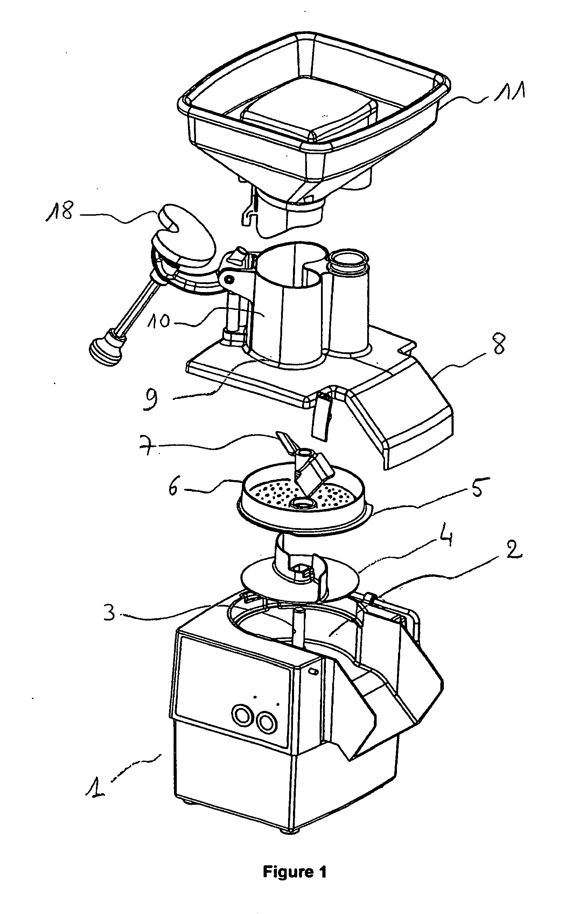

La figure 1 présente un mode de réalisation préférentiel d'un appareil de traitement mécanique d'aliments selon l'invention. On distingue le corps de l'appareil 1 de traitement mécanique d'aliments, comportant notamment une chambre 2 et un arbre moteur 3. Sur cet arbre moteur viennent s'adapter un disque 4 d'évacuation de la purée, une grille 5 munie d'une couronne 6 surmontant le disque perforé, ainsi qu'un outil 7 de pression des aliments. Au-dessus de ce dispositif se place un couvercle 8 muni d'une ouverture 9 d'introduction des aliments. Cette ouverture est éventuellement équipée d'une trémie d'introduction 10. Afin d'introduire plus facilement et plus rapidement les légumes dans le presse-purée, on peut adapter sur la trémie 10 un entonnoir 11, dont les caractéristiques seront développées plus bas.

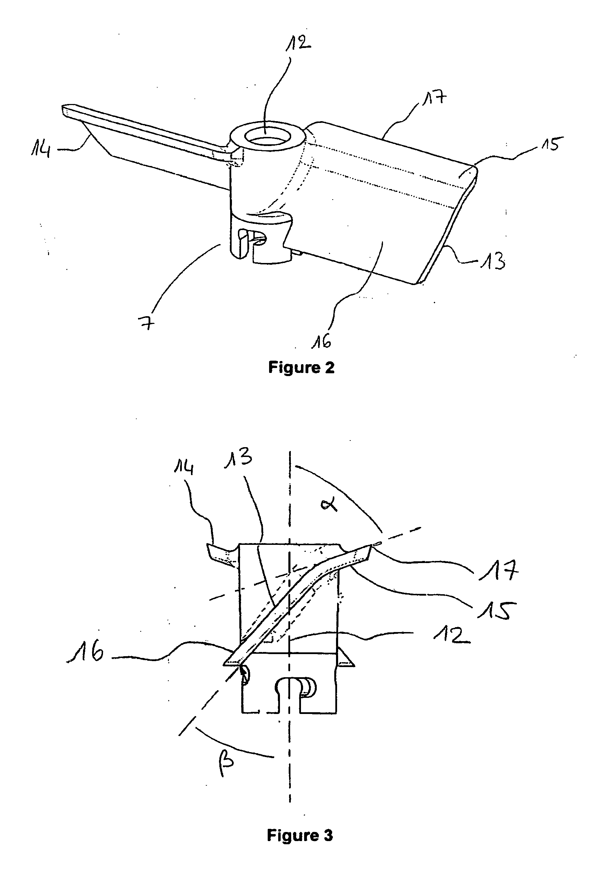

La figure 2 présente un mode de réalisation préférentiel de l'outil 7 de pression des aliments. Cet outil comporte un moyeu 12 et au moins une pale 13. De manière préférentielle, il comporte une deuxième pale 14 identique à la première, l'axe du moyeu 12 constituant un axe de symétrie de l'outil 7.

Selon une variante préférée de l'invention, la pale 13 est formée de deux parties sensiblement planes (15,16), la partie 15 la plus éloignée de la grille comportant le moyen de découpe des aliments. Préférentiellement, ce moyen de découpe est une arête coupante 17.

La demanderesse a effectué des travaux de mise au point des caractéristiques des pales 13 et 14, en relation avec le débit de purée généré par ce dispositif. L'une des fonctions de la partie 15 de la pale 13 est la découpe des légumes lors de leur introduction dans la chambre 2, au moyen de l'arête coupante 17. Les légumes découpés sont alors appliqués et écrasés contre la grille par les faces inférieures des parties 15 et 16 de la pale 13.

Selon les travaux de la demanderesse, le résultat le plus performant est obtenu lorsque l'angle α (figure 3) entre le plan de la partie 15 et l'axe du moyeu 12 est compris entre 60 et 80°, et l'angle β (figure 3) entre le plan de la partie 16 et l'axe du moyeu 12 est compris entre 30 et 50°.

Les angles α et β à considérer sont ceux formés par le plan de la partie, respectivement 15 et 16, de la pale 13 et le plan perpendiculaire au plan de la figure 3, passant par l'axe du moyeu 12.

Selon un mode de fonctionnement classique d'un appareil de type coupe-légume, les légumes sont introduits dans l'appareil 1 par une trémie 10. L'un des intérêts de la trémie est de contenir les légumes lors de l'action du moyen de découpe de la pale 13. La trémie 10 améliore donc l'efficacité de découpe de l'outil 7 par un effet « ciseaux ».

La trémie 10 peut être munie d'un dispositif de sécurité, visant à empêcher l'introduction d'un membre de l'opérateur dans la chambre de découpe lorsque l'appareil fonctionne. La mise en marche de l'appareil nécessite l'activation du dispositif de sécurité. Selon le mode de réalisation représenté à la figure 1, ce dispositif est désactivé lorsque le poussoir 18 de la trémie 10 est en position ouverte. Il faut donc recharger la trémie 10 en légumes entre chaque phase de rotation de l'outil de pression 7.

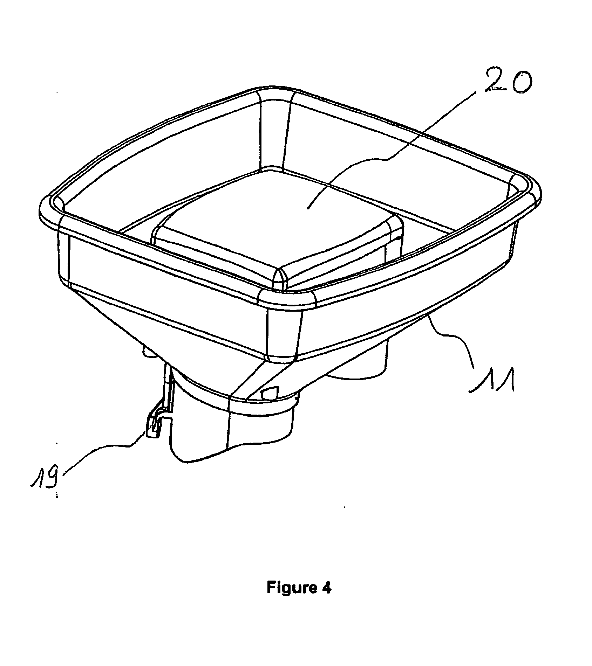

L'un des objets de l'invention étant de réaliser de grandes quantités de purée en peu de temps, il est avantageux d'adapter sur la trémie 10 un entonnoir 11, facilitant l'introduction en une seule fois d'une grande quantité de légumes, par exemple des pommes de terre cuites. Un mode de réalisation préférentiel de cet entonnoir est représenté à la figure 4.

La présence de l'entonnoir 11 implique de laisser le poussoir 18 en position ouverte. De manière préférentielle, l'entonnoir 11 est donc muni d'un système 19 d'activation du dispositif de sécurité de l'appareil coupe-légumes. Ce système permet la réalisation de purée en continu. La nature du système 19 d'activation dépend du dispositif de sécurité de l'appareil 1. Dans le cas d'une sécurité magnétique, le système 19 peut être essentiellement constitué d'un aimant.

Afin de ne pas faire courir de risque à l'opérateur, l'entonnoir 11 doit toutefois empêcher l'introduction de doigts ou d'une main dans la chambre 2 de l'appareil 1. Selon une forme préférée de l'invention, cet effet est obtenu au moyen d'un obstacle 20, formant une chicane à l'entrée du col de l'entonnoir 11. Cet obstacle peut par exemple être constitué d'une plaque reposant sur quatre pieds, ces derniers étant fixés à la paroi de l'entonnoir. Les espaces laissés libres entre cet obstacle 20 et la paroi de l'entonnoir 11 permettent le passage des légumes dans la chambre 2 par gravité, tout en empêchant l'introduction d'une main.

## Revendications

1. Appareil de traitement mécanique d'aliments (1) comportant un dispositif presse-purée, ledit dispositif comprenant **un arbre moteur (3) sur lequel s'adaptent :**
- une grille presse-purée (5),
- un outil (7) de pression des aliments pour appliquer les aliments contre la grille,
l'outil de pression (7) comprenant un moyeu (12) et au moins une pale (13), cette pale portant un moyen (17) de découpe des aliments avant leur application contre la grille,
ledit appareil étant **caractérisé en ce que** la pale (13) est formée de deux parties (15,16) sensiblement planes, la partie (15) la plus éloignée de la grille portant le moyen (17) de découpe des aliments, un angle (α) entre le plan de la partie (15) la plus eloignée de la grille et l'axe du moyeu (12) étant compris entre 60 et 80° et un angle (β) entre le plan de l'autre partie (16) et l'axe du moyeu (12) étant compris entre 30 et 50°, ledit dispositif comprenant un disque évacuateur (4) des aliments traités, **situé sous la grille** et adapte sur l'arbre moteur (3).

2. Appareil selon la revendication 1, **caractérisé en ce que** le moyen de découpe des aliments est une arête (17) coupante.

3. Appareil selon l'une des revendications précédentes, **caractérisé en ce que** l'outil (7) de pression est muni de deux pales (13, 14) identiques, l'axe du moyeu (12) constituant un axe de symétrie de l'outil (7).

4. Appareil selon l'une des revendications précédentes, **caractérisé en ce que** la grille presse-purée comporte une couronne (6) encerclant la chambre utile balayée par l'outil (7) de pression des aliments.

5. Appareil selon l'une des revendications précédentes, **caractérisé en ce qu'**il comporte un couvercle (8) muni d'une ouverture (9) d'introduction des aliments.

6. Appareil selon la revendication 5, **caractérisée en ce que** le couvercle est équipé d'une trémie (10) d'introduction des aliments.

7. Appareil selon la revendication 6, **caractérisé en ce que** la trémie (10) est équipée d'un dispositif de sécurité visant à empêcher l'introduction d'un membre d'un opérateur lorsque l'appareil fonctionne.

8. Appareil selon la revendication 7, **caractérisé en ce qu'**il est muni d'un entonnoir (11) équipé d'un moyen d'activation (19) d'un dispositif de sécurité de l'appareil (1).

9. Appareil selon la revendication 8, **caractérisé en ce que** l'entonnoir (11) comporte un obstacle (20) à l'introduction d'un membre de l'opérateur à l'intérieur de l'appareil (1).

10. Utilisation d'un appareil selon l'une des revendications précédentes, afin de réaliser de la purée à l'échelle de la restauration collective.

## Claims

1. An appliance for mechanically processing food stuffs (1) comprising a potato-masher device, said device comprising a drive shaft (3) on which is fitted:
- a potato-masher grate (5),
- a food compression tool (7) for applying the food stuffs against the grate, and
the compression tool (7) comprising a hub (12) and at least one blade (13), this blade supporting a means (17) for cutting the food stuffs before their application against the grate,
said appliance being **characterised in that** the blade (13) is formed from two substantially flat parts (15,16), part (15) the furthest away from the grate supporting food cutting means (17), an angle (α) between the plane of part (15) the furthest away from the grate and the axis of the hub (12) being between 60 and 80° and an angle (β) between the plane of the other part (16) and the axis of the hub (12) being between 30 and 50°, said device comprising a disc (4) for evacuating the processed food stuffs, located underneath the grate and fitted to the drive shaft (3).

2. An appliance according to claim 1, **characterised in that** the food cutting means is a cutting edge (17).

3. An appliance according to one of the previous claims, **characterised in that** the compression tool (7) is fitted with two identical blades (13, 14), the axis of the hub (12) constituting an axis of symmetry of the tool (7).

4. An appliance according to one of the previous claims, **characterised in that** the potato-masher grate comprises a crown (6) surrounding the working chamber subjected to sweeping actions from the food compression tool (7).

5. An appliance according to one of the previous claims, **characterised in that** it comprises a cover (8) fitted with an opening (9) for introducing the food stuffs.

6. An appliance according to claim 5, **characterised in that** the cover is fitted with a food chute (10) for introducing the food stuffs.

7. An appliance according to claim 6, **characterised in that** the food chute (10) is fitted with a safety device intended to prevent a member of the operator from being introduced when the appliance is in operation.

8. An appliance according to claim 7, **characterised in that** it is fitted with a funnel (11) fitted with a means for activating (19) a safety device of the appliance (1).

9. An appliance according to claim 8, **characterised in that** the funnel (11) comprises an obstacle (20) preventing the introduction of a member of the operator into the appliance (1).

10. The use of an appliance according to one of the previous claims for producing mashed potato on a scale for application in group catering.

## Patentansprüche

1. Gerät zur mechanischen Verarbeitung von Lebensmitteln (1) mit einer Püreepressvorrichtung, wobei die besagte Vorrichtung eine Antriebswelle (3) enthält, zu der folgende Vorrichtungen passen:
- ein Püreepressgitter (5),
- ein Presswerkzeug (7) für die Lebensmitteln, um die Lebensmittel gegen das Gitter zu drücken, und
das Presswerkzeug (7) eine Nabe (12) und zumindest einen Flügel (13) enthält, wobei dieser Flügel eine Vorrichtung (17) zum Zerschneiden der Lebensmittel vor dem Andrücken an das Gitter trägt,
das besagte Gerät **dadurch gekennzeichnet ist, dass** der Flügel (13) aus zwei Abschnitten (15, 16) gebildet wird, die in etwa eben sind, wobei der weiter vom Gitter entfernte Abschnitt (15) die Vorrichtung (17) zum Zerschneiden der Lebensmittel trägt, und ein Winkel (α) zwischen der Ebene des weiter vom Gitter entfernten Abschnitts (15) und der Nabenachse (12) 60 bis 80° beträgt, und ein Winkel (β) zwischen der Ebene des anderen Abschnitts (16) und der Nabenachse (12) 30 bis 50° beträgt, und die besagte Vorrichtung eine Scheibe (4) zum Ausbringen der verarbeiteten Lebensmittel enthält, die sich unter dem Gitter befindet, und an die Antriebswelle (3) angepasst ist.

2. Gerät nach Anspruch 1, **dadurch gekennzeichnet, dass** die Vorrichtung zum Zerschneiden der Lebensmittel eine Schneide (17) ist.

3. Gerät nach einem der vorherigen Ansprüche, **dadurch gekennzeichnet, dass** das Presswerkzeug (7) mit zwei identischen Flügeln (13, 14) ausgestattet ist, und die Nabenachse (12) eine Symmetrieachse des Werkzeugs (7) bildet.

4. Gerät nach einem der vorherigen Ansprüche, **dadurch gekennzeichnet, dass** das Püreepressgitter einen Kranz (6) enthält, der die Nutzkammer umgibt, in der sich das Werkzeug (7) zum Pressen von Lebensmitteln bewegt.

5. Gerät nach einem der vorherigen Ansprüche, **dadurch gekennzeichnet, dass** es einen Deckel (8) enthält, der mit einer Öffnung (9) zum Beigeben von Lebensmitteln ausgestattet ist.

6. Gerät nach Anspruch 5, **dadurch gekennzeichnet, dass** der Deckel mit einer Lademulde (10) zum Beigeben der Lebensmittel ausgestattet ist.

7. Gerät nach Anspruch 6, **dadurch gekennzeichnet, dass** die Lademulde (10) mit einer Sicherheitsvorrichtung versehen ist, die darauf abzielt, das Einführen eines Körpergliedes eines Bedieners zu verhindern, wenn sich das Gerät in Betrieb befindet.

8. Gerät nach Anspruch 7, **dadurch gekennzeichnet, dass** es mit einem Trichter (11) versehen ist, der mit einem Aktivierungsmittel (19) für eine Sicherheitsvorrichtung des Gerätes (1) versehen ist.

9. Gerät nach Anspruch 8, **dadurch gekennzeichnet, dass** der Trichter (11) ein Hindernis (20) zum Einführen eines Körpergliedes eines Bedieners ins Innere des Gerätes (1) enthält.

10. Verwendung eines Gerätes nach einem der vorherigen Ansprüche, zur Herstellung eines Pürees in einer Menge, die in Gemeinschaftsküchen üblich ist.
